# EUROPEAN PATENT SPECIFICATION

(11) **EP 3 595 879 B1**
(45) Date of publication and mention of the grant of the patent: **24.09.2025**
(21) Application number: 18707375.4
(22) Date of filing: 27.02.2018
(51) Int. Cl.: B29C 70/50, B29B 15/12, B29K 101/10

(54) **METHOD AND APPARATUS FOR IMPREGNATING REINFORCEMENT MATERIAL**
VERFAHREN UND VORRICHTUNG ZUM IMPRÄGNIEREN VON VERSTÄRKUNGSMATERIAL
PROCÉDÉ ET APPAREIL POUR IMPRÉGNER UN MATÉRIAU DE RENFORT

(30) Priority: 13.03.2017 EP 17160563
(43) Date of publication of application: 22.01.2020
(73) Proprietor: Hexcel Composites Limited, Duxford, Cambridgeshire CB22 4QB (GB)
(72) Inventor: ARCIDIACONO, Marco, Duxford Cambridgeshire CB22 4QB (GB); ELLIS, John, Duxford Cambridgeshire CB22 4QB (GB); FISCHEREDER, Achim, 4061 Pashing (AT); BLAHOUS, Thomas, 4720 Neumarkt (AT)
(74) Representative: TLIP Limited
(86) International application number: PCT/EP2018/054828
(87) International publication number: WO 2018/166787

(56) References cited:
- EP-A1- 0 458 038
- EP-A1- 2 692 783
- US-A- 5 330 595

## Description

### FIELD OF THE INVENTION

The present invention relates to a process for impregnating fibrous material with a thermosetting resin, particularly but not exclusively to a process for impregnating a fibrous reinforcement material to form a composite moulding material such as a prepreg without the use of a resin backing layer.

### BACKGROUND

Composite materials comprise a fibrous reinforcement embedded within a matrix material. These materials are laid up in a mould and cured to form a rigid part. Typically, the matrix material is formed from a thermoset resin that is cured by polymerising it into a rigid lattice of cross-linked polymer chains. In order to ensure the resin is applied in the optimum quantity and to completely wet out the fibres, it is preferred to preimpregnate the fibrous reinforcement before it is applied to the mould. A preimpregnated fibrous reinforcement is known as a prepreg. Incomplete impregnation of the fibrous material results in an increase of voids in the final cured part, thus it is desirable to use prepregs having as high a degree of resin impregnation of the fibrous material as possible. This can be particularly important for prepregs that are to be used in so called out-of-autoclave curing processes, which are particularly useful in the manufacture of wind energy components, as such processes, and the resulting cured parts, are very sensitive to the presence of voids.

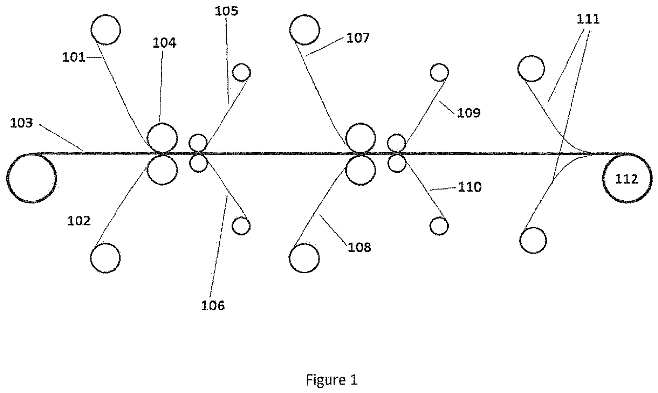

Prepregs with a high degree of resin impregnation are typically formed by first casting resin as a thin film onto a backing sheet. The resin coated faces of the backing sheets (101, 102 of Figure 1) are then brought into contact with a fibrous reinforcement material (103). Usually two resin films are simultaneously brought into contact with the fibrous reinforcement on opposing faces. Rollers are used either in nip (104) or s-wrap configuration to apply pressure to the backs of the backing sheets to drive the resin into the fibrous reinforcement to completely impregnate the fibres with resin. Once the resin has been pressed into the fibrous reinforcement the backing sheets are removed (105, 106), and, if necessary, more resin may be added by applying subsequent resin films (107, 108) in the same manner. Once the prepreg has been fully impregnated any remaining backing sheets are removed (109, 110) and replaced with a polymeric protective sheet (111) to prevent the prepreg from sticking to itself as it is wound onto a roll (112).

The backing sheets act as barriers between the apparatus and the resin to prevent fouling and accumulation of resin on the impregnation apparatus. This is particularly important when using thermoset resins, such as epoxy resins, used in structural composites, as their nature means they are particularly tacky.

The backing paper also provides a convenient moving surface on which to cast the resin films. The backing sheet is usually a silicone coated paper which functions as a releasable carrier medium for the resin; the silicone coating provides a low surface energy surface which can be peeled away from the tacky thermosetting resin film. For every meter of prepreg that is produced in this way at least two, and sometimes four or more, meters of backing sheet are required, and this represents a significant proportion of prepreg production costs as well as an environmental cost. The silicone of the backing sheet is also a contaminant to the resin, which can interfere with the cure reaction, degrading the mechanical properties of the final cured part.

There is therefore a need in the art to achieve impregnation of a prepreg having a reduced variance of resin content and, preferably, a high degree of resin impregnation. For prepreg production to be economically viable appropriate production rates need to be achieved. Additionally, the use of backing sheets for resin film transfer should be minimised or, preferably, avoided entirely.

Various methods of impregnating sheets of fibres with resin in a continuous dual belt press, and in which the resin is applied to the fibre without the use of a backing sheet are known, for example see GB2040801, US4,743,187, EP0389798 and US5,201,979. However, such methods are all based on the use of thermoplastic resins, which have significantly different properties to thermosetting resins, such as the ability to form films that may be relatively easily handled without a supporting backing layer, even at relatively high temperature. Similarly, thermosetting resins, particularly those used in the manufacture of wind energy parts, have very limited flow control compared to thermoplastic resins, resulting in the need for prevent resin flow out of the fibres during impregnation. Yet further, thermosetting resins are more sensitive to heat than thermoplastic resins, and only a relatively limited amount of heat can be applied to such resins during impregnation to avoid early onset of curing, and therefore the impregnation conditions must be more carefully controlled for such resins. This is illustrated in GB2040801, US4,743,187, EP0389798 and US5,201,979, discussed above, which all use relatively high temperatures over relatively short periods to condition the thermoplastic resins used therein before and/or during curing. US5330595 A and EP0458038 A1 disclose a process and an apparatus for preparing a prepreg comprising reinforcement fibre impregnated with a thermosetting resin matrix without the use of backing layers.

The invention aims to obviate and/or mitigate the above described problems and/or to provide improvements generally.

### SUMMARY OF THE INVENTION

According to the invention there is provided a process and an apparatus as defined in any one of the accompanying claims.

In a first aspect the present invention provides a process according to claim 1.

In a second aspect the present invention provides an apparatus according to claim 11.

### DETAILED DESCRIPTION OF THE INVENTION

The process of the present invention is directed to the production of a prepreg comprising reinforcement fibre impregnated with a thermosetting resin matrix, and in this context the term "impregnated" means any degree of impregnation, from partial impregnation (including embodiments in which the thermosetting resin is principally present on the surface of the layer of reinforcement fibre, i.e. a so called semipreg), up to effectively complete, or "full", impregnation (i.e. in which the reinforcement fibre is effectively fully wet-out by the thermosetting resin). In general, there is no standard universally used method for assessing the degree of resin impregnation in all types of fibre, and in many cases this is assessed by visual inspection, with an opaque product indicating a lower degree of impregnation, and a translucent product indicating a higher degree of impregnation. The process of the present invention is particularly suitable for the production of prepregs having a consistent, or "controlled", degree of impregnation and also prepregs having generally high degrees of impregnation.

In the process of the present invention, the layer of first thermosetting resin matrix is applied to the first surface of the layer of reinforcement fibre, and the first surface of the layer of reinforcement fibre is bought into contact with the support surface of the first continuous belt, so that the layer of first thermosetting resin matrix is positioned between, and in contact with, the first surface of the layer of reinforcement fibre and the support surface of the first continuous belt, and this part of the process may be carried out in any order. Specifically, the layer of first thermosetting resin matrix may be applied to the support surface of the first continuous belt, and the first surface of the layer of reinforcement fibre may then be applied to the support surface of the first continuous belt over the layer of first thermosetting resin matrix; or, preferably, the layer of first thermosetting resin matrix may be applied directly to the first surface of the layer of reinforcement fibre, preferably as a liquid or semisolid film, and the coated first surface of the layer of reinforcement fibre may then be bought into contact with the support surface of the first continuous belt so that the layer of first thermosetting resin matrix is between the first surface of the layer of reinforcement fibre and the support surface of the first continuous belt.

Applying the layer of first thermosetting resin matrix directly to the first surface of the layer of reinforcement fibre gives the advantage of starting impregnation of the resin into the fibres from the point of resin deposition, and also takes advantage of any pressure used in the deposition process. Direct resin coating on the layer of fibre also reduces issues associated with depositing resin on the belt, such as belt heat damage, discontinuous coating and/or damage at the belt splice, and also reduces the build-up of residual resin on the belt.

The layer of first thermosetting resin matrix may be applied to the first surface of the layer of reinforcement fibre in any conventional way, but according to the present invention, the layer of first thermosetting resin matrix is applied to the first surface of the layer of reinforcement fibre without the use of a backing layer, which reduces the amount of waste material generated in the process and also reduces material costs. The use of backing layers can be avoided in the process of the present application because the impregnation is carried out between the support surfaces of two continuous belts, and this also avoids the need for compaction rollers, resulting in reductions in equipment and maintenance costs. Suitable means for applying the layer of first thermosetting resin matrix directly to the first surface of the layer of reinforcement fibre include deposition from dies, such as slot dies, reverse roll coating and knife over roll coating.

In the process of the present invention, the layer of first thermosetting resin matrix applied to the first surface of the layer of reinforcement fibre is heated in contact with the support surface of the continuous belt before the second surface of the layer of reinforcement fibre is bought into contact with the support surface of the second continuous belt, and this allows the first thermosetting resin matrix to be preconditioned to improve its impregnation into the layer of reinforcement fibre during the subsequent impregnation step between the support surfaces of the two continuous belts. Specifically, if the layer of first thermosetting resin is not pre-heated before the second surface of the layer of reinforcement fibre is bought into contact with the support surface of the second continuous belt, the resin may be too viscous to fully impregnate the reinforcement fibre, and may be squeezed out of the press. Furthermore, heating the layer of first thermosetting resin matrix between the first surface of the layer of reinforcement fibre and the support surface of the first continuous belt allows the resin to begin impregnating the layer of reinforcement fibre before the second continuous belt is applied, again improving the final degree of impregnation and reducing, or even completely avoiding, the squeezing out of resin in the belt press. This pre-impregnation is also assisted by pressure between the layer of reinforcement fibre and the support surface of the first continuous belt, for example due to the weight of the layer of reinforcement fibre if this is positioned above the first continuous belt at this stage, and/or due to tension in the layer of reinforcement fibre pushing it towards the support surface of the first continuous belt.

The layer of first thermosetting resin matrix applied to the first surface of the layer of reinforcement fibre may be heated in contact with the support surface of the first continuous belt to any temperature suitable to soften/liquefy the resin matrix sufficiently to improve its impregnation into the layer of reinforcement fibre, but preferably it is heated to a temperature of from 40 to 120°C, preferably from 45 to 100°C. Similarly, the layer of first thermosetting resin matrix applied to the first surface of the layer of reinforcement fibre may be heated in contact with the support surface of the first continuous belt for any time/distance sufficient to improve its impregnation into the layer of reinforcement fibre, but preferably it is heated over a distance of from 2 to 20m, preferably from 4 to 15m, more preferably from 5 to 12m.

In a particular embodiment of the present invention, the heating of the first thermosetting resin matrix applied to the first surface of the layer of reinforcement fibre in contact with the support surface of the first continuous belt may be carried out in two or more stages, particularly stages of increasing temperature. For example, the heating may be carried out in three consecutive stages at temperatures of 60°C, 70°C and 80°C respectively, and the lengths of the 3 stages may be from 2.5 to 4m for the first stage, from 4 to 6m for the second stage and from 0.25 to 1m for the third stage.

The layer of first thermosetting resin matrix applied to the first surface of the layer of reinforcement fibre may be heated in contact with the support surface of the first continuous belt in any suitable way, but preferably by heating the support surface of the first continuous belt, for example by passing the support surface of the first continuous belt over a heated surface, such as a heat table. In a preferred embodiment of the present invention the layer of first thermosetting resin matrix applied to the first surface of the layer of reinforcement fibre is heated in contact with the support surface of the first continuous belt by passing the support surface of the first continuous belt over a curved heated surface. Preferably the curved heated surface is convex, thereby increasing the pressure between the layer of reinforcement fibre and the support surface of the first continuous belt and to so improve impregnation of the resin into the layer of reinforcement fibre.

In the process of the present application, the support surfaces of the first and/or second continuous belts are preferably continuous, i.e. the support surfaces are preferably not in the form of chain belts but are substantially even and without significant gaps, in order to provide even support for the layer of reinforcement fibre and to provide consistent pressure during impregnation. In a particular embodiment, the support surfaces of the first and/or second continuous belts have a low surface energy, to allow ready removal of any resin matrix remaining on the support surfaces after removal of the impregnated layer of fibre and to so prevent the build-up of residual resin; and in particular the support surfaces of the first and/or second continuous belt are preferably formed from PTFE, silicone, polypropylene, polyamide or polished metal. The support surfaces of the first and second continuous belts may be integral with the belts, i.e. the support surface is simply the outer surface of a continuous belt, so that the belt and the support surface are formed from the same material, or the support surface may be in the form of an additional layer fixed to the continuous belt, for example a continuous layer of PTFE, silicone, polypropylene, polyamide or polished metal, applied to the outer surface of a conventional continuous belt such as a chain-link belt and/or a belt formed from glass reinforcement.

In the process of the extending beyond the scope of the appended claims, all of the thermosetting resin to be impregnated into the reinforcement fibre may be applied to one side of the layer of fibre; however, according to the invention, the process further comprises applying a layer of a second thermosetting resin matrix to the second surface of the layer of reinforcement fibre before the second surface of the layer of reinforcement fibre is bought into contact with the support surface of the second continuous belt. Applying a layer of second thermosetting resin matrix to the second face of the layer of reinforcement fibre in this way can improve impregnation of the resin into the fibre layer. In this embodiment of the invention, the layer of second thermosetting resin matrix may be applied to the second surface of the layer of reinforcement fibre in any conventional manner, as discussed with respect to the application of the layer of first thermosetting resin matrix to the first surface of the layer of reinforcement fibre. For example, the layer of second thermosetting resin matrix may be applied by any conventional means, such as via slot dies, reverse roll coating or knife over roll coating, and at any stage before the second surface of the layer of reinforcement fibre is bought into contact with the support surface of the second continuous belt.

In a first aspect of this embodiment of the process of the present invention, the layer of second thermosetting resin matrix is applied to the second surface of the layer of reinforcement fibre after the heating of the layer of first thermosetting resin matrix and the first surface of the layer of reinforcement fibre in contact with the support surface of the first continuous belt, so that the layer of second thermosetting resin matrix is initially heated only by residual heat remaining in the layer of first thermosetting resin matrix and the layer of reinforcement fibre following the prior passage over the heated support surface of the first continuous belt.

In a second aspect of this embodiment of the process of the present invention, the layer of second thermosetting resin matrix is applied to the second surface of the layer of reinforcement fibre before the heating of the layer of first thermosetting resin matrix and the first surface of the layer of reinforcement fibre in contact with the support surface of the first continuous belt, so that the layer of second thermosetting resin matrix is also heated during passage of the layer of first thermosetting resin matrix and the layer of reinforcement fibre over the heated support surface of the first continuous belt. In this embodiment, the layer of second thermosetting resin matrix may be applied to the second surface of the layer of reinforcement fibre at any point before the layer of first thermosetting resin matrix and the first surface of the layer of reinforcement fibre come into contact with the support surface of the first continuous belt. For example, the layer of second thermosetting resin matrix may be applied to the second surface of the layer of reinforcement fibre at essentially the same time as the layer of first thermosetting resin matrix is applied to the first surface of the layer of reinforcement fibre.

In embodiments of the present invention in which layers of thermosetting resin matrix are applied to both surfaces of the layer of reinforcement fibre, any suitable amounts may be applied to each surface, but preferably the amount of thermosetting resin matrix applied to the second surface of the layer of reinforcement fibre is not more than the amount applied to the first surface. In particular, the ratio of the weight of the layer of first thermosetting resin matrix to the weight of the layer of second thermosetting resin matrix is preferably from 1:1 to 10:1, more preferably from 3:2 to 3:1.

In embodiments of the present invention in which layers of thermosetting resin matrix are applied to both surfaces of the layer of reinforcement fibre, the first and second thermosetting resin matrices may be different, but preferably the first thermosetting resin matrix and the second thermosetting resin matrix are the same material.

The step of bringing the second surface of the layer of reinforcement fibre (which in some embodiments may have a layer of thermosetting resin applied thereto) into contact with the support surface of the second continuous belt, and the subsequent steps of heating and then cooling the layers of thermosetting resin(s) and reinforcement fibres between the support surfaces of the first and second continuous belts may be carried out in any suitable manner, but the use of a dual belt press is particularly convenient. In particular, the heating step of part e) of the process and the cooling step of part f) of the process may both be carried out in the section of a dual belt press in which the two belts run closely together provided with a first, heating, section and a second, cooling, section.

The first and second continuous belts may be operated at any convenient speeds, but preferably the two belts are operated at the same speed to reduce frictional effects, and more preferably they are operated at speeds of from 5 to 15m/minute, more preferably from 7 to 12m/minute.

In step e) of the process of the present invention the temperature to which the layers of resin(s) and reinforcement fibre are heated between the support surfaces of the first and second continuous belts are selected so that the first thermosetting resin matrix (and the second thermosetting resin matrix, where present) impregnate the layer of reinforcement fibre to the preferred degree. However, preferably the temperature is selected to minimise, or more preferably completely avoid, early curing of the resin matrix. In particular, the heating in step e) is preferably carried out at a higher temperature than the temperature of heating in step c), and more preferably the heating in step e) is carried out at a temperature of from 60 to 200°C, such as from 80 to 160°C. Similarly, the length of the heating zone, i.e. the length over which heating is carried out in step e) is preferably from 1 to 10m, more preferably from 2 to 6m.

In addition to heating in step e), the layer of reinforcement fibre and the layer of first thermosetting resin (and the layer of second thermosetting resin, where present) may also be subjected to pressure between the support surfaces of the first and second continuous belts. The pressure applied at this stage is preferably relatively low, and is most preferably only sufficient to ensure good contact between the support surfaces of the first and second continuous belts and the respective surfaces of the layer of reinforcement fibre, so as to promote good heat transfer from the support surfaces of the continuous belts to the layer of first thermosetting resin (and the layer of second thermosetting resin, where present) in contact with the layer of reinforcement fibre. The pressure applied between the support surfaces of the first and second continuous belts may conveniently be controlled by setting a suitable gap between the support surfaces of the two belts in the heating zone. Setting too wide a gap may result in poor heating of the resin, and will also result in low and/or uneven pressure applied to the layers of resin and fibre, leading to poor and/or irregular impregnation; while setting too narrow a gap will result in excessive pressure being applied to the layer(s) of thermosetting resin, and therefore resin being squeezed out from between the support surfaces, again leading to reduced and/or uneven impregnation and also in the wasting of resin. Thus, the gap between the support surfaces of the belts in the heating zone is preferably set so that the support surfaces may just touch in the absence of layers of resin and fibre, or so that a gap of up to 10mm is present; most preferably the gap is set to the thickness of the layer of reinforcement fibre once it has been impregnated to the required degree with thermosetting resin matrix. Preferred pressures between the support surfaces of the first and second continuous belts in step e) range from 0.05 to 1 bar, more preferably from 0.1 to 0.5 bar.

Optionally, a region of increased pressure may be provided towards the end of the heating section to provide a final push to complete impregnation of the thermosetting resin matrix into the layer of reinforcement fibre. This region may be a relatively short region of increased pressure, such as provided by a single pair of nip rollers; or, preferably, it may be a longer region of gradually increasing pressure, such as provided by staggered calander rolls and, optionally, one or more pairs of nip rollers. Where present, the area of increased pressure at the end of the heating section preferably provides pressures of from 0.5 to 10 bar, more preferably from 2 to 5 bar between the support surfaces of the first and second continuous belts.

In step f) of the process of the present invention the layer of reinforcement fibre impregnated with the first thermosetting resin matrix (and the second thermosetting resin, when present) is cooled between the support surfaces of the first and second continuous belts, and this cooling promotes the separation of any thermosetting resin matrix present on the surfaces of the layer of reinforcement fibre from the support surfaces of the continuous belts. Thus, the cooling may be carried out at any temperature sufficient to promote this separation, but preferably the temperature used is selected to reduce the condensation of water vapour that may be present in the atmosphere in which the process is carried out, i.e. the cooling temperate is preferably above the dew point. Suitable temperature ranges therefore include from 0 to 20°C, preferably from 1 to 15°C, more preferably from 2 to 10°C. Similarly, the length of the cooling zone, i.e. the length over which cooling is carried out in step f) is preferably from 1 to 10m, more preferably from 2 to 6m.

In addition to cooling in step f), the layer of reinforcement fibre impregnated with thermosetting resin may also be subjected to pressure between the support surfaces of the first and second continuous belts. The pressure applied at this stage is preferably relatively low, and is most preferably only sufficient to ensure good contact between the support surfaces of the first and second continuous belts and the respective surfaces of the layer of reinforcement fibre, so as to promote good heat transfer from the thermosetting resin impregnated reinforcement fibre to the support surfaces of the continuous belts, and to therefore promote cooling of the thermosetting resin impregnated layer of reinforcement fibre. The pressure applied between the support surfaces of the first and second continuous belts in this stage may be controlled as discussed with respect to step e), for example by setting a suitable gap between the support surfaces of the two belts in the cooling zone. Setting too wide a gap may result in poor cooling of the resin, and will also result in resin adhering to the support surfaces of the continuous belts, leading to poor irregular resin impregnation of the layer of reinforcement fibre and/or potential damage to the support surfaces of the belts; while setting too narrow a gap will result in excessive pressure being applied to the thermosetting resin impregnated reinforcement fibre, and therefore adhesion of the resin to the support surfaces, again leading to reduced and/or uneven impregnation and also in the wasting of resin. Thus, the gap between the support surfaces of the belts in the cooling zone is preferably set so that the support surfaces may just touch in the absence of layers of resin and fibre, or so that a gap of up to 10mm is present; most preferably the gap is set to the thickness of the layer of reinforcement fibre once it has been impregnated to the required degree with thermosetting resin matrix. Preferred pressures between the support surfaces of the first and second continuous belts in step f) range from 0.05 to 1 bar, more preferably from 0.1 to 0.5 bar.

Any thermosetting resin matrices suitable for the impregnation of reinforcement fibres to form a prepreg may be used in the process of the present invention, but preferably the first thermosetting resin matrix and/or the second thermosetting resin matrix, when present, comprises an epoxy resin, a phenolic resin, a vinyl ester resin, a polyester resin or mixtures thereof, more preferably the first and/or second thermosetting resin matrix comprises an epoxy resin. In a preferred embodiment the first and/or second thermosetting resin is solid or semisolid at 20°C.

In order to assist the curing of the prepregs formed by the process of the present invention they will preferably comprise a curative system comprising one or more curing agents for the thermosetting resin. Such curing systems may be added to the prepregs following or during impregnation of the reinforcement fibre, but preferably the curative system is present in the thermosetting resin matrix when it is applied to the reinforcement fibre in the process of the present invention. Any curing agents capable of promoting curing of the specific thermosetting resin used in a particular prepreg may be used, including hydrazide curatives, urea based curatives, amine curatives, imidiazole curatives, dicyandiamide curatives and mixtures thereof, but preferably curatives are selected that do not promote curing under the conditions used in the process of preparing the prepreg.

In embodiments of the present invention in which a layer of a second thermosetting resin matrix is applied to the second surface of the layer of reinforcement fibre, the second thermosetting resin matrix may be the same as the first resin matrix or may be different, for example the second thermosetting resin matrix may comprise a different thermosetting resin to the first thermosetting resin matrix, or the amount of thermosetting resin may be different or the type and/or amount of curative may be different. Preferably, however, the second thermosetting resin matrix will be generally the same as, and more preferably identical to, the first thermosetting resin matrix.

Any reinforcement fibre suitable for use in prepregs for forming structural components on curing may be used in the process of the present invention, but preferably the reinforcement fibre comprises glass fibre, carbon fibre, aramid fibre or mixtures thereof. Preferably the reinforcement fibre is used in the form of a layer having an areal weight of 50 to 2000 g/m², more preferably 300 to 1500 g/m².

The reinforcement fibre may be in any form suitable for production of a prepreg, but is preferably unidirectional, biaxial or multiaxial (such as triaxial, tetraaxial, etc.) and is preferably woven, non-woven, stitched or an NCF. The layer of reinforcement fibre may be any width suitable for preparing a prepreg, such as from 300 to 2000mm, typically 500 to 1500mm, such as 1250mm.

In a preferred embodiment of the present invention the width of the layer of the first thermosetting resin matrix applied to the first surface of the layer of reinforcement fibre is less than the width of the layer of reinforcement fibre. In this embodiment the layer of the first thermosetting resin matrix is preferably applied centrally to the first surface of the layer of reinforcement fibre so that uncoated regions of similar width are present at both edges of the first surface of the layer of reinforcement fibre following application of the layer of first thermosetting resin matrix. Preferably the uncoated regions at the edges of the first surface of the layer of reinforcement fibre each have a width of from 5 to 100mm, more preferably from 10 to 75mm, most preferably from 25 to 50mm.

In embodiments of the present invention in which a layer of a second thermosetting resin matrix is applied to the second surface of the layer of reinforcement fibre the width of the layer of the second thermosetting resin matrix applied to the second surface of the layer of reinforcement fibre is less than the width of the layer of reinforcement fibre, and more preferably the layer of the second thermosetting resin matrix is preferably applied centrally to the second surface of the layer of reinforcement fibre so that uncoated regions of similar width are present at both edges of the second surface of the layer of reinforcement fibre following application of the layer of second thermosetting resin matrix. Preferably the uncoated regions at the edges of the second surface of the layer of reinforcement fibre each have a width of from 5 to 100mm, more preferably from 10 to 75mm, most preferably from 25 to 50mm.

During the impregnation steps of the process of the present invention the thermosetting resin matrix may flow laterally across the reinforcement fibre as well as into the fibre and this may lead to resin being squeezed out of the layer of reinforcement fibre, particularly at the lateral edges. So, by applying the thermosetting resin matrix centrally and providing uncoated regions at the edges of the layer of reinforcement fibre, the resin may flow to fill the uncoated regions during impregnation, but the outflow of resin from the edges of the layer of reinforcement fibre may be reduced, or even completely avoided. This results not only in a saving of raw materials, but also reduces or even prevents the build-up of resin on the support surfaces of the continuous belts, thereby reducing the need to remove resin from the support surfaces and saving operation time.

Following cooling between the support surfaces of the first and second continuous belts, the layer of reinforcement fibre impregnated with thermosetting resin matrix may be removed from the support surfaces in any convenient manner, such as by winding onto a roller. Optionally one or more additional layers, such as disposable backing layers, may be added to one or both sides of the layer of impregnated reinforcement fibre during or after its removal from the support surfaces.

In an embodiment of the present invention the prepreg may be cured as it is removed from between the belts. This produces a rigid laminate which can be used in automotive or wind energy applications. By curing the laminate online the present invention provides a method for producing a low cost laminate with a high degree of resin impregnation.

The degree or extent of impregnation of a prepreg may be assessed by any suitable means, such as by visual inspection.

In the apparatus of the present invention, the means for applying the layer of a first thermosetting resin matrix to the first surface of the layer of reinforcement fibre may be arranged to provide the resin matrix to the support surface of the first continuous belt for subsequent transfer to the fist surface of the layer of reinforcement fibre, but is preferably arranged to apply the layer of a first thermosetting resin matrix directly to the first surface of the layer of reinforcement fibre, preferably in the form of a liquid or semisolid film. The means for applying the resin matrix may comprise deposition from dies, such as slot dies, reverse roll coating and knife over roll coating.

According to the present invention, the apparatus of the invention further comprises means for applying a layer of a second thermosetting resin matrix to the second surface of the layer of reinforcement fibre before the second surface of the layer of reinforcement fibre is bought into contact with the support surface of the second continuous belt.

In a first aspect of this embodiment of the apparatus of the present invention the means for applying the layer of a second thermosetting resin matrix to the second surface of the layer of reinforcement fibre is arranged to apply the second thermosetting resin matrix to the second surface of the layer of reinforcement fibre after the heating of the layer of first thermosetting resin matrix applied to the first surface of the layer of reinforcement fibre in contact with the support surface of the first continuous belt.

In a second aspect of this embodiment of the apparatus of the present invention the means for applying the layer of a second thermosetting resin matrix to the second surface of the layer of reinforcement fibre is arranged to apply the second thermosetting resin matrix to the second surface of the layer of reinforcement fibre before the heating of the layer of first thermosetting resin matrix applied to the first surface of the layer of reinforcement fibre in contact with the support surface of the first continuous belt. For example, the apparatus may be arranged so that the layer of second thermosetting resin matrix is applied to the second surface of the layer of reinforcement fibre at essentially the same time as the layer of first thermosetting resin matrix is applied to the first surface of the layer of reinforcement fibre.

In an embodiment of the present invention the means for heating the layer of first thermosetting resin matrix applied to the first surface of the layer of reinforcement fibre in contact with the support surface of the first continuous belt comprises a heated surface, preferably a curved heated surface.

In preferred embodiments of the present invention the support surface of the first continuous belt and/or the support surface of the second continuous belt is continuous, and preferably the support surface of the first continuous belt and/or the support surface of the second continuous belt has a low surface energy, more preferably the support surface of the first continuous belt and/or the support surface of the second continuous belt is formed from PTFE, silicone, polypropylene, polyamide or polished metal. The continuous belt may be made from the above materials or may be any conventional belt, such as a chain link belt or a glass reinforcement belt coated with any of the above materials.

The apparatus of the present invention may be formed from any convenient components. For example, the means for heating and compressing the layer of first thermosetting resin matrix and the layer of reinforcement fibre between the support surfaces of the first and second continuous belts so that the first thermosetting resin matrix impregnates the layer of reinforcement fibre may comprise a dual belt press.

In preferred embodiments of the present invention, the means for heating the layer of first thermosetting resin matrix and the first surface of the layer of reinforcement fibre in contact with the support surface of the first continuous belt, the means for heating the layer of first thermosetting resin matrix and the layer of reinforcement fibre between the support surfaces of the first and second continuous belts so that the first thermosetting resin matrix impregnates the layer of reinforcement fibre, and/or the means for cooling the layer of reinforcement fibre impregnated with the first thermosetting resin matrix between the support surfaces of the first and second continuous belts may comprise small, displaceable and/or interchangeable elements. This will enable cooling/heating length variation at any time, based on process requirements, increasing the flexibility of use of the apparatus. In addition, the use of small, displaceable and/or interchangeable parts will also improve the ease of transport, storage and setting up of the apparatus of the present invention. In particular, a simple process layout, combined with the use of, for example, cantilever drive rolls for the continuous belts, allows for the use of pre-spliced belts, eliminating the need for a splicing station and also providing belts having improved strength and with regular thickness (because there is no overthickness at the splice point). Additionally, pre-spliced belts may be seamlessly joined, which, in addition to providing improved strength, also prevents splice marks being impressed into the surface of the prepreg (impressed splice marks are generally considered to be defects by end-users).

The invention will now be explained by way of example only, and with reference to the following Figures, in which:
Figure 1 is a diagrammatic example of a nip process of impregnation of the prior art;
Figure 2 is a diagram of a first embodiment of the present invention; and
Figure 3 is a diagram of a second embodiment of the present invention.

Figure 1 has been discussed in the introductory part of the description.

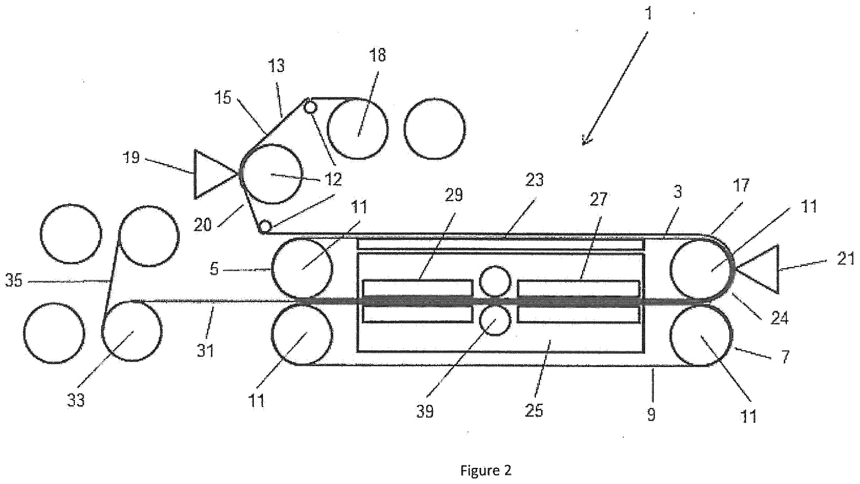

Figure 2 shows an apparatus 1 for preparing a prepreg comprising reinforcement fibre impregnated with a thermosetting resin matrix.

The apparatus 1 comprises a fist continuous belt 3 having a support surface 5, and a second continuous belt 7 having a support surface 9. The continuous belts 3,7 are each supported by pairs of rollers 11, with the support surfaces 5,9 not engaging with the rollers. Each continuous belt 3,7 is formed from a continuous layer of PTFE. The apparatus 1 further comprises a set of rollers 12 for guiding a layer of reinforcement fibre 13 having a first surface 15 and a second surface 17 unwound from a master roll 18 so that the first surface 15 contacts the support surface 5 of the first continuous belt 3.

The apparatus 1 additionally comprises a first slot die 19 for depositing a layer or film 20 of liquid or semisolid thermosetting resin matrix onto the first surface 15 of the layer of reinforcement fibre 13. The slot die 19 is arranged to deposit the layer of resin 20 onto the first surface 15 of the layer of reinforcement resin 13 before the first surface 15 contacts the support surface 5 of the first continuous belt 3, so that the layer or resin 20 is positioned between the first surface 15 of the layer of reinforcement fibre 13 and the support surface 5 of the first continuous belt 3 following contact. The apparatus 1 also comprises a heat table 23 arranged to heat the layer of thermosetting resin matrix 20 applied to the first surface 15 of the layer of reinforcement fibre 13 as the first continuous belt 3 passes over the heat table 23. The length of the heat table may be from 4 to 15m, such as 8m, and the heat table 23 is adapted to heat the film of thermosetting resin matrix 20 to a temperature of from 40 to 120°C, optionally in 3 separate stages of increasing temperature.

The surface of the heat table 23 in contact with the first continuous belt 3 may be curved upwards, for example with a 30 metre radius degree of curvature, to increase the pressure between the support surface 5 of the first continuous belt 3 and the first surface 15 of the layer of reinforcement fibre 13 and to thereby improve impregnation of the layer of thermosetting resin matrix 20 into the layer of reinforcement fibre 13.

The apparatus 1 additionally comprises a second slot die 21 for depositing a second layer 24 of liquid or semisolid thermosetting resin matrix onto the second surface 17 of the layer of reinforcement fibre 13. The second slot die 21 is arranged to deposit the second layer of resin 24 onto the second surface 17 of the layer of reinforcement resin 13 before the second surface 17 contacts the support surface 9 of the second continuous belt 7, but after the heating of the first layer of thermosetting resin matrix 20 applied to the first surface 15 of the layer of reinforcement fibre 13 in contact with the support surface 5 of the first continuous belt 3.

In an alternative embodiment, the second slot die 21 is arranged to deposit the second layer of resin 24 onto the second surface 17 of the layer of reinforcement resin 13 before the heating of the first layer of thermosetting resin matrix 20 applied to the first surface 15 of the layer of reinforcement fibre 13 in contact with the support surface 5 of the first continuous belt 3; for example, the second slot die 21 may be arranged to deposit the second layer of resin 24 onto the second surface 17 of the layer of reinforcement resin 13 at essentially the same time that the first slot die 19 deposits the layer of resin 20 onto the first surface 15 of the layer of reinforcement resin 13.

The apparatus 1 additionally comprises a belt press component 25. The belt press component 25 may be arranged to provide a degree of compression between the support surfaces 5, 9 of the first and second continuous belts 3,7; and preferably the degree of compression is relatively low, such as 0.3 bar. For example, the gap between the support surfaces 5,9 of the first and second continuous belts 3,7 is just less than the thickness of the layer of reinforcement fibre 13 and the first and second films of thermosetting resin matrix 20,24, so that the pressure applied to the layers of resin 20,24 is sufficient to promote good heat transfer between the layers 20,24 and the support surfaces 5,9 without causing any of the resin to be squeezed out of the belt press 25.

The belt press component 25 comprises a first, heating, zone 27 and a second, cooling, zone 29. The heating zone 27 is arranged to heat the first and second layers of thermosetting resin matrix 20,24 and the layer of reinforcement fibre 13 to a greater temperature than the temperature produced by the heat table 23, and preferably to a temperature of from 60 to 200°C. The heating zone 27 may have any suitable length to promote sufficient impregnation of the layers of thermosetting resin 20,24 into the layer of reinforcement fibre 13 to produce a thermosetting resin impregnated layer of reinforcement fibre or prepreg 31, but preferably the length is from 1 to 10m, such as 4 or 5m. The cooling zone 29 is arranged to cool the prepreg 31 formed in the heating zone 27 sufficiently to allow any of the thermosetting resin matrix of the layers 20,24 remaining on the surface of the prepreg 31 to be removed from the support surfaces 5,9 of the first and second continuous belts 3,7, and preferably to a temperature of from 0 to 20°C, such as 4 or 5°C. The cooling zone 29 may be any length sufficient to effectively cool the prepreg 31, but is preferably from 1 to 10m, such as 4 or 5m. The belt press 25 may also be configured to provide a degree of pressure between the support surfaces 5,9 of the continuous belts 3,7 in the cooling zone 29, and preferably the degree of pressure is sufficient to promote good contact between the support surfaces 5,9 of the continuous belts 3,7 with the prepreg 31 to promote cooling of the prepreg 31 but not to prevent release of any of the resin forming the layers of thermosetting resin matrix 20,24 from the support surfaces 5,9 of the continuous belts 3,7, such as a pressure of 0.3 bar.

The heating and cooling in the heating and cooling zones 27,29 may be provided in any convenient manner, such as by the use of fixed heating and cooling plates, or by modular heating and cooling components, such as small units connected to heating and cooling sources, so that the lengths of the respective heating and cooling zones 27,29 may be varied by varying the heating or cooling supplied to the individual units.

Optionally a region of increased pressure, or nip, 39 may be positioned between the heating zone 27 and the cooling zone 29 to promote the complete impregnation of the films of thermosetting resin 20,24 into the layer of reinforcement fibre 13. For example, the nip 39 may provide a pressure of 3 bar between the support surfaces 5,9 of the first and second continuous belts 3,7.

Following passage through the cooling zone 29, the prepreg 31 may be removed from the support surfaces 5,9 of the continuous belts 3,7; for example by winding the prepreg 31 onto a prepreg roll 33. Optionally, one or more backing sheets 35 may be applied to one or both surfaces of the prepreg 31 during the winding step.

The apparatus 1 may be operated at speeds of from 5 to 15m/minute, such as from 7 to 12m/minute.

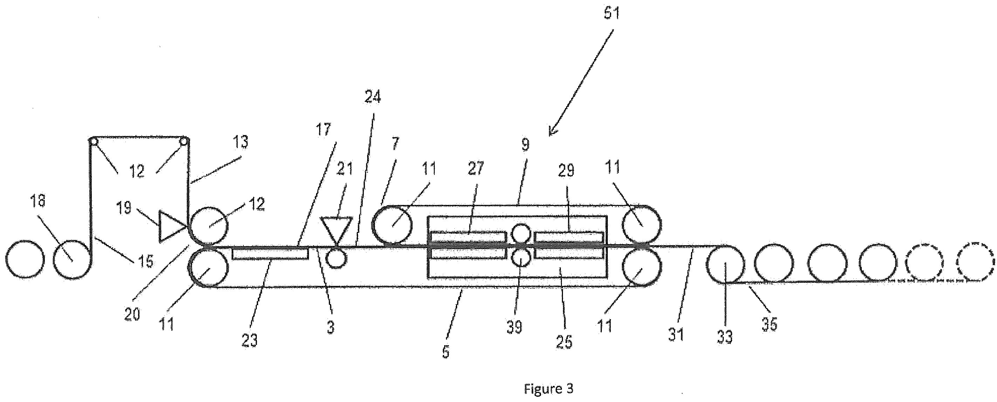

Figure 3 shows an apparatus 51 for preparing a prepreg comprising reinforcement fibre impregnated with a thermosetting resin matrix. In general, the apparatus 51 shown in Figure 3 comprises components corresponding to the apparatus 1 shown in Figure 2, and the same reference numerals are used in each Figure to indicate corresponding components in each apparatus. The principle differences in the apparatus 51 shown in Figure 3 compared to the apparatus 1 shown in Figure 2 is that the components of the apparatus 51 are all arranged generally at the same level, that the length of the first continuous belt 3 is greater than the length of the second continuous belt 7, and that the heat table 23 is positioned before the belt press 25 rather than above it.

### EXAMPLE OF THE INVENTION

Prepreg was produced using a Flatbed laminating machine for textile industry by the method of the present invention. The machine had a preheating IR over the entry zone of the bottom belt, 2.3 m long heated zone with 18 spring-mounted heating elements, driven pressure roller and 1.15 m long cooled zone with 9 spring-mounted cooling elements. Trials were carried out with heated zone elements at temperatures between 100 and 120°C and line speed between 4 and 7 m/min. Materials used in the trial were multiaxial E-glass fabrics, specifically Biax 600 and Triax 1200 gsm (widely used reinforcements in wind energy applications) with Hexcel M9.6 and M9.6LT epoxy formulated resins (also widely used matrices for Wind Energy prepregs) pre-filmed and applied to one side or both sides of the reinforcement prior to being processed into the laminator. Resin films areal weight was such to achieve a resin areal content between 35 and 50% (typical values in wind energy applications). Laminated products had the same quality as prepreg produced in conventional conversion machines, including: level of impregnation, resin distribution, tack, thermal and mechanical properties.

## Claims

1. A process for preparing a prepreg (31) comprising reinforcement fibre impregnated with a thermosetting resin matrix without the use of backing layers (101, 102), said process comprising:
a) providing a layer of reinforcement fibre (13);
b) applying a layer of a first thermosetting resin matrix (20) to the first surface (15) of the layer of reinforcement fibre (13) without the use of a backing layer (101,102) and bringing the first surface (15) of the layer of reinforcement fibre (13) into contact with the support surface (5) of a first continuous belt (3), so that the layer of first thermosetting resin matrix (20) is positioned between, and in contact with, the first surface (15) of the layer of reinforcement fibre (13) and the support surface (5) of the first continuous belt (3);
c) applying a layer of a second thermosetting resin matrix (24) to the second surface (17) of the layer of reinforcement fibre (13) without the use of a backing layer (101,102);
d) heating the layer of first thermosetting resin matrix (20) applied to the first surface (15) of the layer of reinforcement fibre (13) in contact with the support surface (5) of the first continuous belt (3) and the layer of second thermosetting resin matrix (24) applied to the second surface (17) of the layer of reinforcement fibre (13), before bringing the second surface (17) of the layer of reinforcement fibre (13) into contact with the support surface (7) of a second continuous belt (9);
e) heating the layer of first thermosetting resin matrix (20), the layer of second thermosetting resin matrix (24) and the layer of reinforcement fibre (13) between the support surfaces (5, 9) of the first and second continuous belts (3, 7) so that the first and second thermosetting resin matrices (20, 24) impregnate the layer of reinforcement fibre (13);
f) cooling the layer of reinforcement fibre impregnated with the first and second thermosetting resin matrices (31) between the support surfaces (5, 9) of the first and second continuous belts (3, 7); and
g) removing the layer of reinforcement fibre impregnated with the first and second thermosetting resin matrices (31) from the support surfaces (5, 9) of the first and second continuous belts (3, 7).

2. A process according to claim 1, wherein the layer of first thermosetting resin matrix (20) is applied directly to the first surface (15) of the layer of reinforcement fibre (13), preferably as a liquid or semisolid film.

3. A process according to any of the preceding claims, wherein the layer of first thermosetting resin matrix (20) applied to the first surface (15) of the layer of reinforcement fibre (13) is heated in contact with the support surface (5) of the first continuous belt (3) to a temperature of from 40 to 120°C, preferably from 45 to 100°C; and/or wherein the layer of first thermosetting resin matrix (20) applied to the first surface (15) of the layer of reinforcement fibre (13) is heated in contact with the support surface (5) of the first continuous belt (3) over a distance of from 2 to 20m, preferably from 4 to 15m, more preferably from 5 to 12m.

4. A process according to any of the preceding claims, wherein the layer of first thermosetting resin matrix (20) applied to the first surface (15) of the layer of reinforcement fibre (13) is heated in contact with the support surface (5) of the first continuous belt (3) by heating the support surface (5) of the first continuous belt (3), preferably by passing the support surface (5) of the first continuous belt (3) over a heated surface (23), more preferably a curved heated surface; and/or wherein the support surface (5) of the first continuous belt (3) and/or the support surface (9) of the second continuous belt (7) is continuous, preferably wherein the support surface (5) of the first continuous belt (3) and/or the support surface (9) of the second continuous belt (7) has a low surface energy, more preferably wherein the support surface (5) of the first continuous belt (3) and/or the support surface (9) of the second continuous belt (7) is formed from PTFE, silicone, silane or polished metal.

5. A process according to any preceding claim, wherein the layer of second thermosetting resin matrix (24) is applied to the second surface (17) of the layer of reinforcement fibre (13) at essentially the same time as the layer of first thermosetting resin matrix (20) is applied to the first surface (15) of the layer of reinforcement fibre (13).

6. A process according to any preceding claim, wherein the ratio of the weight of the layer of first thermosetting resin matrix (20) to the weight of the layer of second thermosetting resin matrix (24) is from 1:1 to 10:1, preferably from 3:2 to 3:1; and/or wherein the first thermosetting resin matrix (20) and the second thermosetting resin matrix (24) are the same material.

7. A process according to any of the preceding claims, wherein the heating in step e) is carried out at a higher temperature than the temperature in step c), preferably wherein the heating in step e) is carried out at a temperature of from 60 to 200°C, more preferably from 80 to 160°C; and/or wherein the heating in step e) is carried out over a distance of from 1 to 10m, preferably from 2 to 6m.

8. A process according to any of the preceding claims, wherein in step f) the layer of reinforcement fibre impregnated with the first and second thermosetting resin matrices (31) is cooled between the support surfaces (5, 9) of the first and second continuous belts 3, 7) to a temperature of from 0 to 20°C, preferably from 1 to 15°C, more preferably from 2 to 10°C and/or wherein the cooling in step f) is carried out over a distance of from 1 to 10m, preferably from 2 to 6m.

9. A process according to any of the preceding claims, wherein the width of the layer of the first thermosetting resin matrix (20) applied to the first surface (15) of the layer of reinforcement fibre (13) is less than the width of the layer of reinforcement fibre (13), preferably wherein the layer of the first thermosetting resin matrix (20) is applied centrally to the first surface (15) of the layer of reinforcement fibre (13) so that uncoated regions of similar width are present at both edges of the first surface (15) of the layer of reinforcement fibre (13) following application of the layer of first thermosetting resin matrix (20).

10. A process according to claim 9, wherein the width of the layer of the second thermosetting resin matrix (24) applied to the second surface (17) of the layer of reinforcement fibre (13) is less than the width of the layer of reinforcement fibre (13), preferably wherein the layer of the second thermosetting resin matrix (24) is applied centrally to the second surface (17) of the layer of reinforcement fibre (13) so that uncoated regions of similar width are present at both edges of the second surface (17) of the layer of reinforcement fibre (13) following application of the layer of second thermosetting resin matrix (24).

11. An apparatus (1) for preparing a prepreg (31) comprising reinforcement fibre impregnated with a thermosetting resin matrix without the use of backing layers (101, 102), said apparatus comprising:
a) means (19) for applying a layer of a first thermosetting resin matrix (20) to the first surface (15) of a layer of reinforcement fibre (13) without the use of a backing layer (101, 102);
b) a first continuous belt (3) comprising a support surface (5) for receiving the first surface (15) of the layer of reinforcement fibre (13), so that the layer of first thermosetting resin matrix (20) is positioned between, and in contact with, the first surface (15) of the layer of reinforcement fibre (13) and the support surface (5) of the first continuous belt (7);
c) means (21) for applying a layer of a second thermosetting resin matrix (24) to the second surface (17) of the layer of reinforcement fibre (13) without the use of a backing layer (101, 102);
d) means (23) for heating the layer of first thermosetting resin matrix (20) applied to the first surface (15) of the layer of reinforcement fibre (13) in contact with the support surface (5) of the first continuous belt (3) and the layer of second thermosetting resin matrix (24) applied to the second surface (17) of the layer of reinforcement fibre (13);
e) a second continuous belt (7) comprising a support surface (9), and means (26) for bringing the second surface (17) of the layer of reinforcement fibre (13) into contact with the support surface (7) of the second continuous belt (9) after the heating of step d);
f) means (27) for heating the layer of first thermosetting resin matrix (20), the layer of second thermosetting resin matrix (24) and the layer of reinforcement fibre (13) between the support surfaces (5, 9) of the first and second continuous belts (3, 7) so that the first and second thermosetting resin matrices (20, 24) impregnate the layer of reinforcement fibre (13);
g) means (29) for cooling the layer of reinforcement fibre impregnated with the first and second thermosetting resin matrices (31) between the support surfaces (5, 9) of the first and second continuous belts (3, 7); and
h) means for removing the layer of reinforcement fibre impregnated with the first and second thermosetting resin matrices (31) from the support surfaces (5, 9) of the first and second continuous belts (3, 7).

12. An apparatus (1) according to claim 11, wherein the means (21) for applying a layer of a second thermosetting resin matrix (24) to the second surface (17) of the layer of reinforcement fibre (13) is arranged so that the layer of second thermosetting resin matrix (24) is applied to the second surface (17) of the layer of reinforcement fibre (13) at essentially the same time as the layer of first thermosetting resin matrix (20) is applied to the first surface (15) of the layer of reinforcement fibre (13).

13. An apparatus (1) according to claim 11 or claim 12, wherein the support surface (5) of the first continuous belt (3) and/or the support surface (9) of the second continuous belt (7) is continuous, preferably wherein the support surface (5) of the first continuous belt (3) and/or the support surface (9) of the second continuous belt (7) has a low surface energy, more preferably wherein the support surface (5) of the first continuous belt (3) and/or the support surface (9) of the second continuous belt (7) is formed from PTFE, silicone, silane or polished metal.

14. An apparatus (1) according to any of claims 11 to 13 wherein the means (23) for heating the layer of first thermosetting resin matrix (20) and the first surface (15) of the layer of reinforcement fibre (13) in contact with the support surface (5) of the first continuous belt (3), the means (27) for heating the layer of first thermosetting resin matrix (20), the layer of second thermosetting resin matrix (24) and the layer of reinforcement fibre (13) between the support surfaces (5, 9) of the first and second continuous belts (3, 7) so that the first and second thermosetting resin matrices (20, 24) impregnate the layer of reinforcement fibre (13), and/or the means (29) for cooling the layer of reinforcement fibre impregnated with the first and second thermosetting resin matrices (31) between the support surfaces (5, 9) of the first and second continuous belts (3, 7) comprise small, displaceable and/or interchangeable elements.

## Patentansprüche

1. Ein Verfahren zum Herstellen eines Prepregs (31), das mit einer wärmehärtbaren Harzmatrix imprägnierte Verstärkungsfaser beinhaltet, ohne die Verwendung von Trägerschichten (101, 102), wobei das Verfahren Folgendes beinhaltet:
a) Bereitstellen einer Verstärkungsfaserschicht (13);
b) Aufbringen einer Schicht aus einer ersten wärmehärtbaren Harzmatrix (20) auf die erste Oberfläche (15) der Verstärkungsfaserschicht (13) ohne die Verwendung einer Trägerschicht (101, 102) und In-Kontakt-Bringen der ersten Oberfläche (15) der Verstärkungsfaserschicht (13) mit der Stützoberfläche (5) eines ersten Endlosbands (3), sodass die Schicht aus der ersten wärmehärtbaren Harzmatrix (20) zwischen und in Kontakt mit der ersten Oberfläche (15) der Verstärkungsfaserschicht (13) und der Stützoberfläche (5) des ersten Endlosbands (3) positioniert wird;
c) Aufbringen einer Schicht aus einer zweiten wärmehärtbaren Harzmatrix (24) auf die zweite Oberfläche (17) der Verstärkungsfaserschicht (13) ohne die Verwendung einer Trägerschicht (101, 102);
d) Erwärmen der auf die erste Oberfläche (15) der Verstärkungsfaserschicht (13) aufgebrachten Schicht aus der ersten wärmehärtbaren Harzmatrix (20) in Kontakt mit der Stützoberfläche (5) des ersten Endlosbands (3) und der auf die zweite Oberfläche (17) der Verstärkungsfaserschicht (13) aufgebrachten Schicht aus der zweiten wärmehärtbaren Harzmatrix (24) vor dem In-Kontakt-Bringen der zweiten Oberfläche (17) der Verstärkungsfaserschicht (13) mit der Stützoberfläche (7) eines zweiten Endlosbands (9);
e) Erwärmen der Schicht aus der ersten wärmehärtbaren Harzmatrix (20), der Schicht aus der zweiten wärmehärtbaren Harzmatrix (24) und der Verstärkungsfaserschicht (13) zwischen den Stützoberflächen (5, 9) des ersten und des zweiten Endlosbands (3, 7), sodass die erste und die zweite wärmehärtbare Harzmatrix (20, 24) die Verstärkungsfaserschicht (13) imprägnieren;
f) Abkühlen der mit der ersten und der zweiten wärmehärtbaren Harzmatrix imprägnierten Verstärkungsfaserschicht (31) zwischen den Stützoberflächen (5, 9) des ersten und des zweiten Endlosbands (3, 7); und
g) Abnehmen der mit der ersten und der zweiten wärmehärtbaren Harzmatrix imprägnierten Verstärkungsfaserschicht (31) von den Stützoberflächen (5, 9) des ersten und des zweiten Endlosbands (3, 7).

2. Verfahren gemäß Anspruch 1, wobei die Schicht aus der ersten wärmehärtbaren Harzmatrix (20) direkt auf die erste Oberfläche (15) der Verstärkungsfaserschicht (13) aufgebracht wird, vorzugsweise als ein flüssiger oder halbfester Überzug.

3. Verfahren gemäß einem der vorhergehenden Ansprüche, wobei die auf die erste Oberfläche (15) der Verstärkungsfaserschicht (13) aufgebrachte Schicht aus der ersten wärmehärtbaren Harzmatrix (20) in Kontakt mit der Stützoberfläche (5) des ersten Endlosbands (3) auf eine Temperatur von 40 bis 120 °C, vorzugsweise von 45 bis 100 °C, erwärmt wird; und/oder wobei die auf die erste Oberfläche (15) der Verstärkungsfaserschicht (13) aufgebrachte Schicht aus der ersten wärmehärtbaren Harzmatrix (20) in Kontakt mit der Stützoberfläche (5) des ersten Endlosbands (3) über eine Distanz von 2 bis 20 m, vorzugsweise von 4 bis 15 m, bevorzugter von 5 bis 12 m erwärmt wird.

4. Verfahren gemäß einem der vorhergehenden Ansprüche, wobei die auf die erste Oberfläche (15) der Verstärkungsfaserschicht (13) aufgebrachte Schicht aus der ersten wärmehärtbaren Harzmatrix (20) in Kontakt mit der Stützoberfläche (5) des ersten Endlosbands (3) erwärmt wird, indem die Stützoberfläche (5) des ersten Endlosbands (3) erwärmt wird, vorzugsweise indem die Stützoberfläche (5) des ersten Endlosbands (3) über eine erwärmte Oberfläche (23), bevorzugter eine gebogene erwärmte Oberfläche, geführt wird; und/oder wobei die Stützoberfläche (5) des ersten Endlosbands (3) und/oder die Stützoberfläche (9) des zweiten Endlosbands (7) durchgehend ist, wobei vorzugsweise die Stützoberfläche (5) des ersten Endlosbands (3) und/oder die Stützoberfläche (9) des zweiten Endlosbands (7) eine niedrige Oberflächenenergie aufweist, wobei bevorzugter die Stützoberfläche (5) des ersten Endlosbands (3) und/oder die Stützoberfläche (9) des zweiten Endlosbands (7) aus PTFE, Silicon, Silan oder poliertem Metall gebildet ist.

5. Verfahren gemäß einem der vorhergehenden Ansprüche, wobei die Schicht aus der zweiten wärmehärtbaren Harzmatrix (24) im Wesentlichen zu derselben Zeit auf die zweite Oberfläche (17) der Verstärkungsfaserschicht (13) aufgebracht wird, wie die Schicht aus der ersten wärmehärtbaren Harzmatrix (20) auf die erste Oberfläche (15) der Verstärkungsfaserschicht (13) aufgebracht wird.

6. Verfahren gemäß einem der vorhergehenden Ansprüche, wobei das Verhältnis des Gewichts der Schicht aus der ersten wärmehärtbaren Harzmatrix (20) zu dem Gewicht der Schicht aus der zweiten wärmehärtbaren Harzmatrix (24) von 1 : 1 bis 10 : 1, vorzugsweise von 3 : 2 bis 3 : 1, beträgt; und/oder wobei die erste wärmehärtbare Harzmatrix (20) und die zweite wärmehärtbare Harzmatrix (24) aus dem gleichen Material sind.

7. Verfahren gemäß einem der vorhergehenden Ansprüche, wobei das Erwärmen in Schritt e) bei einer höheren Temperatur als der Temperatur in Schritt c) ausgeführt wird, wobei das Erwärmen in Schritt e) vorzugsweise bei einer Temperatur von 60 bis 200 °C, bevorzugter von 80 bis 160 °C, ausgeführt wird; und/oder wobei das Erwärmen in Schritt e) über eine Distanz von 1 bis 10 m, vorzugsweise von 2 bis 6 m, ausgeführt wird.

8. Verfahren gemäß einem der vorhergehenden Ansprüche, wobei die mit der ersten und der zweiten wärmehärtbaren Harzmatrix imprägnierte Verstärkungsfaserschicht (31) in Schritt f) zwischen den Stützoberflächen (5, 9) des ersten und des zweiten Endlosbands (3, 7) auf eine Temperatur von 0 bis 20 °C, vorzugsweise von 1 bis 15 °C, bevorzugter von 2 bis 10 °C abgekühlt wird und/oder wobei das Abkühlen in Schritt f) über eine Distanz von 1 bis 10 m, vorzugsweise von 2 bis 6 m, ausgeführt wird.

9. Verfahren gemäß einem der vorhergehenden Ansprüche, wobei die Breite der auf die erste Oberfläche (15) der Verstärkungsfaserschicht (13) aufgebrachten Schicht aus der ersten wärmehärtbaren Harzmatrix (20) kleiner als die Breite der Verstärkungsfaserschicht (13) ist, wobei vorzugsweise die Schicht aus der ersten wärmehärtbaren Harzmatrix (20) mittig auf die erste Oberfläche (15) der Verstärkungsfaserschicht (13) aufgebracht wird, sodass im Anschluss an die Aufbringung der Schicht aus der ersten wärmehärtbaren Harzmatrix (20) an beiden Rändern der ersten Oberfläche (15) der Verstärkungsfaserschicht (13) nichtbeschichtete Bereiche von ähnlicher Breite vorhanden sind.

10. Verfahren gemäß Anspruch 9, wobei die Breite der auf die zweite Oberfläche (17) der Verstärkungsfaserschicht (13) aufgebrachten Schicht aus der zweiten wärmehärtbaren Harzmatrix (24) kleiner als die Breite der Verstärkungsfaserschicht (13) ist, wobei vorzugsweise die Schicht aus der zweiten wärmehärtbaren Harzmatrix (24) mittig auf die zweite Oberfläche (17) der Verstärkungsfaserschicht (13) aufgebracht wird, sodass im Anschluss an die Aufbringung der Schicht aus der zweiten wärmehärtbaren Harzmatrix (24) an beiden Rändern der zweiten Oberfläche (17) der Verstärkungsfaserschicht (13) nichtbeschichtete Bereiche von ähnlicher Breite vorhanden sind.

11. Eine Vorrichtung (1) zum Herstellen eines Prepregs (31), das mit einer wärmehärtbaren Harzmatrix imprägnierte Verstärkungsfaser beinhaltet, ohne die Verwendung von Trägerschichten (101, 102), wobei die Vorrichtung Folgendes beinhaltet:
a) ein Mittel (19) zum Aufbringen einer Schicht aus einer ersten wärmehärtbaren Harzmatrix (20) auf die erste Oberfläche (15) einer Verstärkungsfaserschicht (13) ohne die Verwendung einer Trägerschicht (101, 102);
b) ein erstes Endlosband (3), das eine Stützoberfläche (5) zum Aufnehmen der ersten Oberfläche (15) der Verstärkungsfaserschicht (13) beinhaltet, sodass die Schicht aus der ersten wärmehärtbaren Harzmatrix (20) zwischen und in Kontakt mit der ersten Oberfläche (15) der Verstärkungsfaserschicht (13) und der Stützoberfläche (5) des ersten Endlosbands (7) positioniert wird;
c) ein Mittel (21) zum Aufbringen einer Schicht aus einer zweiten wärmehärtbaren Harzmatrix (24) auf die zweite Oberfläche (17) der Verstärkungsfaserschicht (13) ohne die Verwendung einer Trägerschicht (101, 102);
d) ein Mittel (23) zum Erwärmen der auf die erste Oberfläche (15) der Verstärkungsfaserschicht (13) aufgebrachten Schicht aus der ersten wärmehärtbaren Harzmatrix (20) in Kontakt mit der Stützoberfläche (5) des ersten Endlosbands (3) und der auf die zweite Oberfläche (17) der Verstärkungsfaserschicht (13) aufgebrachten Schicht aus der zweiten wärmehärtbaren Harzmatrix (24);
e) ein zweites Endlosband (7), das eine Stützoberfläche (9) beinhaltet, und ein Mittel (26) zum In-Kontakt-Bringen der zweiten Oberfläche (17) der Verstärkungsfaserschicht (13) mit der Stützoberfläche (7) des zweiten Endlosbands (9) nach dem Erwärmen von Schritt d);
f) ein Mittel (27) zum Erwärmen der Schicht aus der ersten wärmehärtbaren Harzmatrix (20), der Schicht aus der zweiten wärmehärtbaren Harzmatrix (24) und der Verstärkungsfaserschicht (13) zwischen den Stützoberflächen (5, 9) des ersten und des zweiten Endlosbands (3, 7), sodass die erste und die zweite wärmehärtbare Harzmatrix (20, 24) die Verstärkungsfaserschicht (13) imprägnieren;
g) ein Mittel (29) zum Abkühlen der mit der ersten und der zweiten wärmehärtbaren Harzmatrix imprägnierten Verstärkungsfaserschicht (31) zwischen den Stützoberflächen (5, 9) des ersten und des zweiten Endlosbands (3, 7); und
h) ein Mittel zum Abnehmen der mit der ersten und der zweiten wärmehärtbaren Harzmatrix imprägnierten Verstärkungsfaserschicht (31) von den Stützoberflächen (5, 9) des ersten und des zweiten Endlosbands (3, 7).

12. Vorrichtung (1) gemäß Anspruch 11, wobei das Mittel (21) zum Aufbringen einer Schicht aus einer zweiten wärmehärtbaren Harzmatrix (24) auf die zweite Oberfläche (17) der Verstärkungsfaserschicht (13) so eingerichtet ist, dass die Schicht aus der zweiten wärmehärtbaren Harzmatrix (24) im Wesentlichen zu derselben Zeit auf die zweite Oberfläche (17) der Verstärkungsfaserschicht (13) aufgebracht wird, wie die Schicht aus der ersten wärmehärtbaren Harzmatrix (20) auf die erste Oberfläche (15) der Verstärkungsfaserschicht (13) aufgebracht wird.

13. Vorrichtung (1) gemäß Anspruch 11 oder Anspruch 12, wobei die Stützoberfläche (5) des ersten Endlosbands (3) und/oder die Stützoberfläche (9) des zweiten Endlosbands (7) durchgehend ist, wobei vorzugsweise die Stützoberfläche (5) des ersten Endlosbands (3) und/oder die Stützoberfläche (9) des zweiten Endlosbands (7) eine niedrige Oberflächenenergie aufweist, wobei bevorzugter die Stützoberfläche (5) des ersten Endlosbands (3) und/oder die Stützoberfläche (9) des zweiten Endlosbands (7) aus PTFE, Silicon, Silan oder poliertem Metall gebildet ist.

14. Vorrichtung (1) gemäß einem der Ansprüche 11 bis 13, wobei das Mittel (23) zum Erwärmen der Schicht aus der ersten wärmehärtbaren Harzmatrix (20) und der ersten Oberfläche (15) der Verstärkungsfaserschicht (13) in Kontakt mit der Stützoberfläche (5) des ersten Endlosbands (3), das Mittel (27) zum Erwärmen der Schicht aus der ersten wärmehärtbaren Harzmatrix (20), der Schicht aus der zweiten wärmehärtbaren Harzmatrix (24) und der Verstärkungsfaserschicht (13) zwischen den Stützoberflächen (5, 9) des ersten und des zweiten Endlosbands (3, 7), sodass die erste und die zweite wärmehärtbare Harzmatrix (20, 24) die Verstärkungsfaserschicht (13) imprägnieren, und/oder das Mittel (29) zum Abkühlen der mit der ersten und der zweiten wärmehärtbaren Harzmatrix imprägnierten Verstärkungsfaserschicht (31) zwischen den Stützoberflächen (5,9) des ersten und des zweiten Endlosbands (3, 7) kleine, verschiebbare und/oder austauschbare Elemente beinhalten.

## Revendications

1. Un procédé pour préparer un préimprégné (31) comprenant de la fibre de renforcement imprégnée d'une matrice en résine thermodurcissable sans l'utilisation de couches de support (101, 102), ledit procédé comprenant :
a) le fait de fournir une couche de fibre de renforcement (13) ;
b) le fait d'appliquer une couche d'une première matrice en résine thermodurcissable (20) sur la première surface (15) de la couche de fibre de renforcement (13) sans l'utilisation d'une couche de support (101, 102) et d'amener la première surface (15) de la couche de fibre de renforcement (13) au contact de la surface de soutien (5) d'une première courroie sans fin (3), de sorte que la couche de première matrice en résine thermodurcissable (20) est positionnée entre, et en contact avec, la première surface (15) de la couche de fibre de renforcement (13) et la surface de soutien (5) de la première courroie sans fin (3) ;
c) le fait d'appliquer une couche d'une deuxième matrice en résine thermodurcissable (24) sur la deuxième surface (17) de la couche de fibre de renforcement (13) sans l'utilisation d'une couche de support (101, 102) ;
d) le fait de chauffer la couche de première matrice en résine thermodurcissable (20) appliquée sur la première surface (15) de la couche de fibre de renforcement (13) au contact de la surface de soutien (5) de la première courroie sans fin (3) et la couche de deuxième matrice en résine thermodurcissable (24) appliquée sur la deuxième surface (17) de la couche de fibre de renforcement (13), avant d'amener la deuxième surface (17) de la couche de fibre de renforcement (13) au contact de la surface de soutien (7) d'une deuxième courroie sans fin (9) ;
e) le fait de chauffer la couche de première matrice en résine thermodurcissable (20), la couche de deuxième matrice en résine thermodurcissable (24) et la couche de fibre de renforcement (13) entre les surfaces de soutien (5, 9) des première et deuxième courroies sans fin (3, 7) de sorte que les première et deuxième matrices en résine thermodurcissable (20, 24) imprègnent la couche de fibre de renforcement (13) ;
f) le fait de refroidir la couche de fibre de renforcement imprégnée des première et deuxième matrices en résine thermodurcissable (31) entre les surfaces de soutien (5, 9) des première et deuxième courroies sans fin (3, 7) ; et
g) le fait de retirer la couche de fibre de renforcement imprégnée des première et deuxième matrices en résine thermodurcissable (31) des surfaces de soutien (5, 9) des première et deuxième courroies sans fin (3, 7).

2. Un procédé selon la revendication 1, dans lequel la couche de première matrice en résine thermodurcissable (20) est appliquée directement sur la première surface (15) de la couche de fibre de renforcement (13), préférablement sous forme de film liquide ou semi-solide.

3. Un procédé selon n'importe lesquelles des revendications précédentes, dans lequel la couche de première matrice en résine thermodurcissable (20) appliquée sur la première surface (15) de la couche de fibre de renforcement (13) est chauffée au contact de la surface de soutien (5) de la première courroie sans fin (3) jusqu'à une température allant de 40 à 120 °C, préférablement de 45 à 100 °C ; et/ou dans lequel la couche de première matrice en résine thermodurcissable (20) appliquée sur la première surface (15) de la couche de fibre de renforcement (13) est chauffée au contact de la surface de soutien (5) de la première courroie sans fin (3) sur une distance allant de 2 à 20 m, préférablement de 4 à 15 m, plus préférablement de 5 à 12 m.

4. Un procédé selon n'importe lesquelles des revendications précédentes, dans lequel la couche de première matrice en résine thermodurcissable (20) appliquée sur la première surface (15) de la couche de fibre de renforcement (13) est chauffée au contact de la surface de soutien (5) de la première courroie sans fin (3) par chauffage de la surface de soutien (5) de la première courroie sans fin (3), préférablement par passage de la surface de soutien (5) de la première courroie sans fin (3) par-dessus une surface chauffée (23), plus préférablement une surface chauffée courbe ; et/ou dans lequel la surface de soutien (5) de la première courroie sans fin (3) et/ou la surface de soutien (9) de la deuxième courroie sans fin (7) sont sans fin, préférablement dans lequel la surface de soutien (5) de la première courroie sans fin (3) et/ou la surface de soutien (9) de la deuxième courroie sans fin (7) présentent une faible énergie de surface, plus préférablement dans lequel la surface de soutien (5) de la première courroie sans fin (3) et/ou la surface de soutien (9) de la deuxième courroie sans fin (7) sont formées à partir de PTFE, de silicone, de silane ou de métal poli.

5. Un procédé selon n'importe quelle revendication précédente, dans lequel la couche de deuxième matrice en résine thermodurcissable (24) est appliquée sur la deuxième surface (17) de la couche de fibre de renforcement (13) essentiellement en même temps que la couche de première matrice en résine thermodurcissable (20) est appliquée sur la première surface (15) de la couche de fibre de renforcement (13).

6. Un procédé selon n'importe quelle revendication précédente, dans lequel le rapport du poids de la couche de première matrice en résine thermodurcissable (20) relativement au poids de la couche de deuxième matrice en résine thermodurcissable (24) va de 1/1 à 10/1, préférablement de 3/2 à 3/1 ; et/ou dans lequel la première matrice en résine thermodurcissable (20) et la deuxième matrice en résine thermodurcissable (24) sont le même matériau.

7. Un procédé selon n'importe lesquelles des revendications précédentes, dans lequel le fait de chauffer à l'étape e) est réalisé à une température plus élevée que la température à l'étape c), préférablement dans lequel le fait de chauffer à l'étape e) est réalisé à une température allant de 60 à 200 °C, plus préférablement de 80 à 160 °C ; et/ou dans lequel le fait de chauffer à l'étape e) est réalisé sur une distance allant de 1 à 10 m, préférablement de 2 à 6 m.

8. Un procédé selon n'importe lesquelles des revendications précédentes, dans lequel à l'étape f) la couche de fibre de renforcement imprégnée des première et deuxième matrices en résine thermodurcissable (31) est refroidie entre les surfaces de soutien (5, 9) des première et deuxième courroies sans fin (3, 7) jusqu'à une température allant de 0 à 20 °C, préférablement de 1 à 15 °C, plus préférablement de 2 à 10 °C et/ou dans lequel le fait de refroidir à l'étape f) est réalisé sur une distance allant de 1 à 10 m, préférablement de 2 à 6 m.

9. Un procédé selon n'importe lesquelles des revendications précédentes, dans lequel la largeur de la couche de la première matrice en résine thermodurcissable (20) appliquée sur la première surface (15) de la couche de fibre de renforcement (13) est inférieure à la largeur de la couche de fibre de renforcement (13), préférablement dans lequel la couche de la première matrice en résine thermodurcissable (20) est appliquée centralement sur la première surface (15) de la couche de fibre de renforcement (13) de sorte que des régions non revêtues de largeur similaire sont présentes au niveau des deux bords de la première surface (15) de la couche de fibre de renforcement (13) à la suite de l'application de la couche de première matrice en résine thermodurcissable (20).

10. Un procédé selon la revendication 9, dans lequel la largeur de la couche de la deuxième matrice en résine thermodurcissable (24) appliquée sur la deuxième surface (17) de la couche de fibre de renforcement (13) est inférieure à la largeur de la couche de fibre de renforcement (13), préférablement dans lequel la couche de la deuxième matrice en résine thermodurcissable (24) est appliquée centralement sur la deuxième surface (17) de la couche de fibre de renforcement (13) de sorte que des régions non revêtues de largeur similaire sont présentes au niveau des deux bords de la deuxième surface (17) de la couche de fibre de renforcement (13) à la suite de l'application de la couche de deuxième matrice en résine thermodurcissable (24).

11. Un appareil (1) pour préparer un préimprégné (31) comprenant de la fibre de renforcement imprégnée d'une matrice en résine thermodurcissable sans l'utilisation de couches de support (101, 102), ledit appareil comprenant :
a) un moyen (19) pour appliquer une couche d'une première matrice en résine thermodurcissable (20) sur la première surface (15) d'une couche de fibre de renforcement (13) sans l'utilisation d'une couche de support (101, 102) ;
b) une première courroie sans fin (3) comprenant une surface de soutien (5) pour recevoir la première surface (15) de la couche de fibre de renforcement (13), de sorte que la couche de première matrice en résine thermodurcissable (20) est positionnée entre, et en contact avec, la première surface (15) de la couche de fibre de renforcement (13) et la surface de soutien (5) de la première courroie sans fin (7) ;
c) un moyen (21) pour appliquer une couche d'une deuxième matrice en résine thermodurcissable (24) sur la deuxième surface (17) de la couche de fibre de renforcement (13) sans l'utilisation d'une couche de support (101, 102) ;
d) un moyen (23) pour chauffer la couche de première matrice en résine thermodurcissable (20) appliquée sur la première surface (15) de la couche de fibre de renforcement (13) au contact de la surface de soutien (5) de la première courroie sans fin (3) et la couche de deuxième matrice en résine thermodurcissable (24) appliquée sur la deuxième surface (17) de la couche de fibre de renforcement (13) ;
e) une deuxième courroie sans fin (7) comprenant une surface de soutien (9), et un moyen (26) pour amener la deuxième surface (17) de la couche de fibre de renforcement (13) au contact de la surface de soutien (7) de la deuxième courroie sans fin (9) après le fait de chauffer de l'étape d) ;
f) un moyen (27) pour chauffer la couche de première matrice en résine thermodurcissable (20), la couche de deuxième matrice en résine thermodurcissable (24) et la couche de fibre de renforcement (13) entre les surfaces de soutien (5, 9) des première et deuxième courroies sans fin (3, 7) de sorte que les première et deuxième matrices en résine thermodurcissable (20, 24) imprègnent la couche de fibre de renforcement (13) ;
g) un moyen (29) pour refroidir la couche de fibre de renforcement imprégnée des première et deuxième matrices en résine thermodurcissable (31) entre les surfaces de soutien (5, 9) des première et deuxième courroies sans fin (3, 7) ; et
h) un moyen pour retirer la couche de fibre de renforcement imprégnée des première et deuxième matrices en résine thermodurcissable (31) des surfaces de soutien (5, 9) des première et deuxième courroies sans fin (3, 7).

12. Un appareil (1) selon la revendication 11, dans lequel le moyen (21) pour appliquer une couche d'une deuxième matrice en résine thermodurcissable (24) sur la deuxième surface (17) de la couche de fibre de renforcement (13) est agencé de sorte que la couche de deuxième matrice en résine thermodurcissable (24) est appliquée sur la deuxième surface (17) de la couche de fibre de renforcement (13) essentiellement en même temps que la couche de première matrice en résine thermodurcissable (20) est appliquée sur la première surface (15) de la couche de fibre de renforcement (13).

13. Un appareil (1) selon la revendication 11 ou la revendication 12, dans lequel la surface de soutien (5) de la première courroie sans fin (3) et/ou la surface de soutien (9) de la deuxième courroie sans fin (7) sont sans fin, préférablement dans lequel la surface de soutien (5) de la première courroie sans fin (3) et/ou la surface de soutien (9) de la deuxième courroie sans fin (7) présentent une faible énergie de surface, plus préférablement dans lequel la surface de soutien (5) de la première courroie sans fin (3) et/ou la surface de soutien (9) de la deuxième courroie sans fin (7) sont formées à partir de PTFE, de silicone, de silane ou de métal poli.

14. Un appareil (1) selon n'importe lesquelles des revendications 11 à 13 dans lequel le moyen (23) pour chauffer la couche de première matrice en résine thermodurcissable (20) et la première surface (15) de la couche de fibre de renforcement (13) au contact de la surface de soutien (5) de la première courroie sans fin (3), le moyen (27) pour chauffer la couche de première matrice en résine thermodurcissable (20), la couche de deuxième matrice en résine thermodurcissable (24) et la couche de fibre de renforcement (13) entre les surfaces de soutien (5, 9) des première et deuxième courroies sans fin (3, 7) de sorte que les première et deuxième matrices en résine thermodurcissable (20, 24) imprègnent la couche de fibre de renforcement (13), et/ou le moyen (29) pour refroidir la couche de fibre de renforcement imprégnée des première et deuxième matrices en résine thermodurcissable (31) entre les surfaces de soutien (5, 9) des première et deuxième courroies sans fin (3, 7) comprennent de petits éléments déplaçables et/ou interchangeables.
